# EUROPÄISCHE PATENTSCHRIFT

(11) **EP 1 735 244 B1**
(45) Veröffentlichungstag und Bekanntmachung des Hinweises auf die Patenterteilung: **12.12.2007**
(21) Anmeldenummer: 05743086.0
(22) Anmeldetag: 13.04.2005
(51) Int. Cl.: C02F 1/32

(54) **REINIGUNGSROTOR**
CLEANING ROTOR
ROTOR DE NETTOYAGE

(30) Priorität: 16.04.2004 DE 102004019619
(43) Veröffentlichungstag der Anmeldung: 27.12.2006
(73) Patentinhaber: Oase Wübker GmbH & Co. KG, 48477 Hörstel (DE)
(72) Erfinder: HOFFMEIER, Dieter, 49479 Ibbenbüren (DE)
(74) Vertreter: Kayser, Christoph
(86) Internationale Anmeldenummer: PCT/DE2005/000695
(87) Internationale Veröffentlichungsnummer: WO 2005/100255

(56) Entgegenhaltungen:
- DE-A1- 10 205 655
- DE-B- 1 283 762
- US-A- 3 061 721
- PATENT ABSTRACTS OF JAPAN Bd. 2000, Nr. 10, 17. November 2000 (2000-11-17) & JP 2000 189953 A (TOSHIBA LIGHTING & TECHNOLOGY CORP), 11. Juli 2000 (2000-07-11)
- PATENT ABSTRACTS OF JAPAN Bd. 1997, Nr. 02, 28. Februar 1997 (1997-02-28) & JP 08 276179 A (MARSIMA AQUA SYST CORP), 22. Oktober 1996 (1996-10-22)

## Beschreibung

Die vorliegenden Erfindung betrifft einen Reinigungsrotor mit einer Längsachse und mit einem sich konzentrisch zu der Längsachse erstreckenden Basisteil, Kopfteil und einem sich zwischen dem Basisteil und dem Kopfteil erstreckenden Strebelement, wobei das Strebelement schraubenförmig um die Längsachse herum verläuft.

Ein solcher Reinigungsrotor ist zum Beispiel aus DE 101 47 019 A1 oder DE 1 283 762 B bekannt. Der Nachteil der vorgenannten Reinigungsrotoren, die zur Reinigung von UV-Lampen in Filtervorrichtungen verwendet werden, besteht darin, dass diese aus mehreren Gründen keine gute Reinigungswirkung haben. Entweder ist das Strebelement oder Reinigungselement zu lose, so dass auch mehrere Gänge schraubenförmig um die zu reinigende UV-Lampe nicht ausreichend dicht und somit zuverlässig um jeden Stelle der Außenfläche der Lampe herum streichen. Eine solche Anordnung kann z.B. durch steifere Strebelemente oder Reinigungselemente erzielt werden, die nur eine halbe Ganghöhe aufweisen dafür aber in doppelter Form, zum Beispiel einander diametral gegenüber angeordnet sind und somit die geringe Reinigungswirkung durch eine halbe Ganghöhe verdoppeln. Aber auch die Ausbildung von mehreren Streb- oder Reinigungselementen in einem einzigen Reinigungsrotor führt nicht zu der optimalen Reinigung. Die Steifigkeit kann auch bei einer halben Ganghöhe nicht ausreichend gesteigert werden. Die Reinigungsleistung hängt sehr stark von einer mehrfachen Überstreichung einer zu reinigenden Oberfläche mit einem Streb- oder Reinigungselement und einer zuverlässigen Kontaktierung der gesamten Oberfläche einer UV-Lampe oder eines anderen glatten (Glas-)Kolbens ab.

Die Aufgabe der vorliegenden Erfindung ist daher, einen Reinigungsrotor zu schaffen, der eine zu reinigende Oberfläche bei mehrfacher Überstreichung durch das Streb- oder Reinigselement zuverlässig abreinigt.

Die Aufgabe wird erfindungsgemäß dadurch gelöst, dass zwischen dem Basisteil und dem Kopfteil wenigstens ein Stützteil parallel zur Längsachse angeordnet ist, an dem das Strebelement abgestützt ist.

Das eine Stützteil, das sich parallel zur Längsachse erstreckt und ein schraubenförmig um die Längsachse verlaufendes Streb- oder Reinigungselement abstützt bewirkt, dass auch ein mehrfach um die Längsachse herum verlaufendes Streb- oder Reinigungselement in Richtung der Längsachse eine solche Steifigkeit erhält, dass jede Stelle einer zu reinigenden Oberfläche zuverlässig erreicht wird.

Ein weiterer Vorteil besteht darin, dass an dem Basisteil auch ein Schaufelrad angebracht ist. Mit dem Schaufelrad kann der erfindungsgemäße Reinigungsrotor nicht nur über die direkte Anströmung an das Streb- oder Reinigungselement sondern auch durch eine Anströmung an das Schaufelrad in Drehung versetzt werden. Weitere Vorteile ergeben sich aus den Merkmalen der Unteransprüche 3 bis 9.

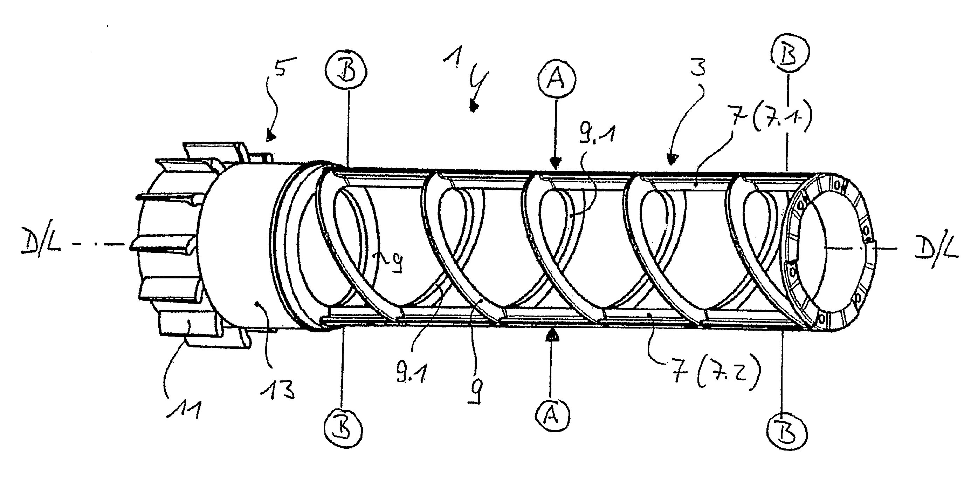

Eine Ausführungsform der vorliegenden Erfindung wird im Folgenden anhand der einzigen Figur näher beschrieben.

Die Figur zeigt eine schematische, perspektivische Ansicht eines erfindungsgemäßen Reinigungsrotors.

In der Figur ist ein Reinigungssrotor 1 schematisch und perspektivisch dargestellt. Der Reinigungsrotor 1 weist eine Längsachse L auf. Der Reinigungsrotor 1 umfaßt ein Kopfteil 3 und ein Basisteil 5, die über ein oder mehrere Stützteile 7 miteinander verbunden sind. Zwischen dem Basisteil 5 und dem Kopfteil 3 verläuft schraubenförmig ein Strebelement 9, das an dem wenigstens einen Stützteil 7 abgestützt ist.

In der vorliegenden Ausführungsform sind das Kopfteil 3 und das Basisteil 5 ringförmig und konzentrisch zur Längsachse L ausgebildet. Zudem sind in der dargestellten Ausführungsform zwei Stützteile 7.1 und 7.2 parallel zur Längsachse L und parallel zueinander angeordnet. Darüber hinaus sind die beiden Stützteile 7.1 und 7.2 am Kopfteil 3 und am Basisteil 5 diametral gegenüberliegend angeordnet, wobei dies in anderen Ausführungsformen nicht der Fall sein muss. Das Strebelement 9 wird an jedem Stützteil 7.1, 7.2 abgestützt. In der vorliegenden Ausführungsform wird das Strebelement 9 nach einer halben Ganghöhe wechselweise an dem ersten Stützteil 7.1 und am zweiten Stützteil 7.2 abgestützt.

In anderen Ausführungsformen kann nur ein Stützteil 7.1 oder 7.2 oder können mehrere Stützteile 7, zum Beispiel drei oder vier Stützeile, vorgesehen sein. In allen Fällen kann der Abstand der Stützteile 7 auf dem Umfang des Kopfteils 3 bzw. des Basisteils 7 freigewählt werden. Auch wenn eine gleichmäßige,oder wenn möglich, symmetrische Anordnung der Stützteile 7 regelmäßig sinnvoll ist, können andere ungleichmäßige oder asymmetrische Anordnungen in speziellen Fällen sinnvoll sein, wenn die Beanspruchung des wenigstens einen abzstützenden Strebelements 9 in Umfangsrichtung ungleichmäßig ist. Die Anzahl und die Anordnung der Stützteile 7 ist abhängig von den zu erwartenden Kräften, die während der Reinigung auf das Strebelement 9 wirken. Auch der Abstand zwischen dem Kopfteil 3 und dem Basisteil 5, das heißt, die Länge der Stützteile 7.1 oder 7.2 kann bedarfsweise frei gewählt werden.

Das zwischen dem Kopfteil 3 und dem Basisteil 5 schraubenförmig verlaufende Strebelement 9 soll wenigstens zwei Ganghöhen umschreiben. In der vorliegenden Ausführungsform umschreibt das Strebelement 9 z.B. 4,5 Ganghöhen. Die Anzahl der umschriebenen Gänge ist abhängig von der Länge des Stützteils 7.1 oder 7.2.

Jedes Stützteil 7.1, 7.2 ist über seine Länge konkav ausgebildet, d.h., es ist nach innen gewölbt. Im Bereich der Innenwölbung, etwa auf halber Länge (Stelle A) ist der Innendurchmesser des Reinigungsrotors 1 etwa 1-2 mm größer als der zu reinigende zylindrische Körper, in der Nähe des Basisteils 5 (Stelle B) und des entgegengestzten freien Endes (Stelle B) ist der Innendurchmesser des Reinigungsrotors 1 etwa 1,5 bis 2,5 mm größer als an der Stelle A. Dadurch entstehen bei Drehung des Reinigungsrotors 1 sogenannten Taumelbewegungen, die dazu führen, dass das Strebelement 9 jede Stelle an der Zylinderoberfläche z.B. eines Glaskolbens erreicht und diese somit auch reinigt. Das Strebelement 9 schließt innenseitig bündig mit jedem Stützteil 7.1, 7.2 ab, so dass sich innenseitig eine stufenlose Bewegungsbahn vom Basisteil 5 zum Kopfteil 3 ergeben kann. Diese Bewegungsbahn auf dem Strebelement 9 wird im Folgenden als Reinigungsfläche 9.1 des Strebelements 9 definiert. Diese Reinigungsfläche 9.1 kann mit einem Material versehen sein, das eine mechanische Reinigung eines zylindrischen Körpers erleichtert, z.B. Fasern, Vliesstoffen, etc.. Die Reinigungsfläche 9.1 kann auch mit einem chemischen Reinigungsmittel versehen sein oder versehen werden, um eine chemisch unterstützte mechanische Reinigung eines zylindrischen Körpers zu unterstützen.

An das Basisteil 5 schließt sich ein Schaufelrad 11 an, dessen Drehachse D mit der Längsachse L des Reinigungsrotors 1 zusammen fällt und mit dem nur ein geringes Drehmoment ausgeübt werden kann. In anderen Ausführungsformen muss die Drehachse D des Schaufelrades 11 nicht mit der Längsachse L des Reinigungsrotors 1 zusammenfallen, sondern kann zum Beispiel in einem Winkel von 90° zu dieser verlaufen. In einem solchen Fall wäre wenigstens ein Übertragungselement zur Übertragung der Drehbewegung des Schaufelrades 11 auf das Basisteil 5 erforderlich.

In der vorliegenden Ausführungsform ist das Schaufelrad 11 fest mit dem Basisteil 5 verbunden. Zwischen dem Schaufelrad 11 und dem Basisteil 5 befindet sich ein hülsenförmiges Abstandsstück 13.

In anderen Ausführungsformen kann das Schaufelrad 11 lösbar an dem Basisteil 5 bzw. an dem Abstandshalter 13 angeordnet sein. In der vorliegenden Ausführungsform ist der Reinigungsrotor 1 mit dem Basisteil 5, dem Kopfteil 3, dem Abstandselement 13 und dem Schaufelrad 11 einstückig ausgebildet.

In der Praxis wird der Reinigungsrotor 1 lose über einen zylindrischen Körper gesetzt, z.B. einen Quarzglaskolben, der eine Schutzhülle für eine UVC-Lampe bildet, derart, dass die Reinigungsfläche 9.1 an der nach innen gewölbten Stelle an der äußeren Umfangsfläche des zylindrischen Körpers anliegt. Das Schaufelrad 11 befindet sich dann im Strömungsweg eines Fluides, zum Beispiel einer Flüssigkeit oder eines Gases, so dass die Strömung des entsprechenden Fluids das Schaufelrad 11 in eine Drehung um die Drehachse D versetzt. Durch die Drehung um die Drehachse D des Schaufelrades 11 dreht sich auch das Abstandselement 13 sowie das Basisteil 5, das Kopfteil 3 und die dazwischen angeordneten Stützelemente 7.1 und 7.2 mit dem Strebelement 9 und der Reinigungsfläche 9.1 um die Längsachse-L. Aufgrund der Drehbewegung der Reinigungsfläche 9.1 um die Längsachse L wird die äußere Umfangsfläche des zylindrischen Körpers abgereinigt. Die durch die Reinigungsfläche 9.1 gelöste Verunreinigungen können von dem vorgenannten Fluid mit fortbewegt werden.

Der Reinigungsrotor 1 ist mit 1 bis 2 mm Spiel, lose über dem zylindrischen Körper angebracht, damit der Reinigungsrotor 1 nicht durch Sand, Schmutz o.dgl. fest klemmt. Ferner sind der Reinigungsrotor 1 und der zu reinigende zylindrische Körper ineinander gelagert, so dass keine zusätzliche Lagerung des Rotors erforderlich ist.

Der Reinigungsrotor 1 zeichnet sich durch eine erhöhte Stabilität aus, so dass auch Oberfläche stark verunreinigter zylindrischer Körper gereinigt werden können. Die starre Verbindung zwischen Schaufelrad 11 und Basisteil 5 führt auch zu einer optimalen Kraftübertragung und einer zuverlässigen Drehbewegung in Abhängigkeit von der Strömungsgeschwindigkeit, so dass dadurch ebenfalls die Reinigungsleistung, optimiert wird.

In speziellen Ausführungsformen können auch mehrere Strebelemente 9 so angeordnet sein, dass jeweils eine Reinigungsfläche 9.1 bei einer Drehbewegung um die Längsachse L auf der Oberfläche eines zu reinigenden Zylinders entlangstreicht.

## Patentansprüche

1. Reinigungsrotor mit einer Längsachse und mit einem sich konzentrisch zu der Längsachse erstreckenden Basisteil, Kopfteil und einem sich zwischen dem Basisteil und dem Kopfteil erstreckenden Strebelement, wobei das Strebelement schraubenförmig um die Längsachse herum verläuft,
**dadurch gekennzeichnet,**
**dass** zwischen dem Basisteil (5) und dem Kopfteil (3) wenigstens ein Stützteil (7) parallel zur Längsachse angeordnet ist, an welchem das Strebelement (9) abgestützt ist und das über seine Länge konkav ausgebildet ist.

2. Reinigungsrotor nach Anspruch 1,
**dadurch gekennzeichnet,**
**dass** an dem Basisteil (5) ein Schaufelrad (11) angeordnet ist, dessen Drehung das Strebelement (9) in Drehung versetzt.

3. Reinigungsrotor nach Anspruch 2,
**dadurch gekennzeichnet,**
**dass** das Schaufelrad (11) eine Drehachse aufweist, die mit der Längsachse zusammenfällt.

4. Reinigungsrotor nach Anspruch 1,
**dadurch gekennzeichnet,**
**dass** das Basisteil (5), das Strebelement (9) und jedes Stützteil (7) einstückig ausgebildet sind.

5. Reinigungsrotor nach Anspruch 2,
**dadurch gekennzeichnet,**
**dass** das Basisteil (5), das Strebelement (9), jedes Stützteil (7)und das Schaufelrad (11) einstückig ausgebildet sind.

6. Reinigungsrotor nach einem der vorstehenden Ansprüche,
**dadurch gekennzeichnet,**
**dass** zwei Stützteile (7.1, 7.2) vorgesehen sind.

7. Reinigungsrotor nach Anspruch 6,
**dadurch gekennzeichnet,**
**dass** das Strebelement (9) zwischen dem Basisteil (5) und dem Kopfteil (3) wenigstens zwei Gänge umschreibt.

8. Reinigungsrotor nach Anspruch 6 oder 7,
**dadurch gekennzeichnet,**
**dass** das Strebelement (9) zwischen den zwei Stützteilen (7.1, 7.2) eine halbe Ganghöhe aufweist.

9. Reinigungsrotor nach einem der vorstehenden Ansprüche,
**dadurch gekennzeichnet,**
**dass** das Kopfteil (3) einstückig mit dem wenigstens einen Strebelement (9) ausgebildet ist.

## Claims

1. Cleaning rotor with a longitudinal axis and with a base part that extends concentrically to the longitudinal axis, a top part, and a strut element that extends between the base part and the top part, the strut element lying helically around the longitudinal axis,
**characterised in that**
between the base part (5) and the top part (3) there is at least one supporting part (7) parallel to the longitudinal axis, on which is supported the strut element (9) and which is made to be concave over its length.

2. Cleaning rotor as in claim 1,
**characterised in that**
on the base part (5) there is positioned a blade wheel (11), the rotation of which sets the strut element (9) into rotation.

3. Cleaning rotor as in claim 2,
**characterised in that**
the blade wheel (11) has an axis of rotation which coincides with the longitudinal axis.

4. Cleaning rotor as in claim 1,
**characterised in that**
the base part (5), the strut element (9) and each supporting part (7) are made in one piece.

5. Cleaning rotor as in claim 2,
**characterised in that**
the base part (5), the strut element (9), each supporting part (7) and the blade wheel (11) are made in one piece.

6. Cleaning rotor as in one of the preceding claims,
**characterised in that**
there are two supporting parts (7.1, 7.2).

7. Cleaning rotor as in claim 6,
**characterised in that**
the strut element (9) has at least two threads between the base part (5) and the top part (3).

8. Cleaning rotor as in claim 6 or 7,
**characterised in that**
the strut element (9) has a half lead height between the two supporting parts (7.1, 7.2).

9. Cleaning rotor as in one of the preceding claims,
**characterised in that**
the top part (3) is made in one piece with the at least one strut element (9).

## Revendications

1. Rotor de nettoyage comportant un axe longitudinal, une partie de base et une partie de tête s'étendant de manière concentrique autour de l'axe longitudinal et un élément de travail s'étendant entre la partie de base et la partie de tête, l'élément de travail formant une hélice autour de l'axe longitudinal,
**caractérisé en ce que**, entre la partie de base (5) et la partie de tête (3), est agencé au moins un élément de support (7) parallèlement à l'axe longitudinal, sur lequel élément de support s'appuie l'élément de travail (9) et lequel élément de support est réalisé concave sur sa longueur.

2. Rotor de nettoyage selon la revendication 1,
**caractérisé en ce qu'**il est agencé, sur la partie de base (5), une roue à aubes (11) dont la rotation entraîne l'élément de travail (9) en rotation.

3. Rotor de nettoyage selon la revendication 2,
**caractérisé en ce que** la roue à aubes (11) présente un axe de rotation qui coïncide avec l'axe longitudinal.

4. Rotor de nettoyage selon la revendication 1,
**caractérisé en ce que** la partie de base (5), l'élément de travail (9) et chaque élément de support (7) sont réalisés d'un seul tenant.

5. Rotor de nettoyage selon la revendication 2,
**caractérisé en ce que** la partie de base (5), l'élément de travail (9), chaque élément de support (7) et la roue à aubes (11) sont réalisés d'un seul tenant.

6. Rotor de nettoyage selon l'une des revendications précédentes,
**caractérisé en ce qu'**il est prévu deux éléments de support (7.1, 7.2).

7. Rotor de nettoyage selon la revendication 6,
**caractérisé en ce que** l'élément de travail (9) décrit au moins deux spires entre la partie de base (5) et la partie de tête (3).

8. Rotor de nettoyage selon la revendication 6 ou 7,
**caractérisé en ce que** l'élément de travail (9) présente une demi-spire entre les deux éléments de support (7,1, 7.2).

9. Rotor de nettoyage selon l'une des revendications précédentes,
**caractérisé en ce que** la partie de tête (3) est réalisée d'un seul tenant avec l'élément de travail (9) au moins unique.
